# EUROPÄISCHE PATENTSCHRIFT

(11) **EP 3 584 482 B1**
(45) Veröffentlichungstag und Bekanntmachung des Hinweises auf die Patenterteilung: **07.04.2021**
(21) Anmeldenummer: 19180468.1
(22) Anmeldetag: 17.06.2019
(51) Int. Cl.: F16L 5/04, F16L 5/14, A62C 2/06, H02G 3/08, H02G 3/22

(54) **NACHBELEGUNGSVORRICHTUNG ZUM EINBAU IN EINE RAUCH-, GAS- UND WASSERDICHTE, SOWIE ZWEITWEISE HITZE- UND FEUERFESTE KABEL- UND/ODER ROHRDURCHFÜHRUNG FÜR SCHIFFE ODER GEBÄUDE**
ASSIGNMENT DEVICE FOR INSTALLATION IN A SMOKEPROOF, GASPROOF AND WATERPROOF CABLE AND/OR PIPE DUCT FOR SHIPS OR BUILDINGS WHICH IS TEMPORARILY HEAT-PROOF AND FIRE-PROOF
DISPOSITIF D'INSERTION DESTINÉ AU MONTAGE DANS UN PASSAGE DE CÂBLES ET / OU DE TUBES ÉTANCHE AU FUMÉE, AUX GAZ ET À L'EAU AINSI QUE RÉSISTANT TEMPORAIREMENT À LA CHALEUR ET / OU AU FEU POUR NAVIRES OU BÂTIMENTS

(30) Priorität: 19.06.2018 DE 102018114683
(43) Veröffentlichungstag der Anmeldung: 25.12.2019
(73) Patentinhaber: AIK Flammadur Brandschutz GMBH, 34123 Kassel (DE)
(72) Erfinder: ZIBUSCHKA, Jörg, 34613 Schwalmstadt (DE)
(74) Vertreter: Patentanwälte Walther Hinz Bayer PartGmbB

(56) Entgegenhaltungen:
- EP-A2- 2 493 041
- EP-A2- 2 570 157
- DE-A1- 10 227 098

## Beschreibung

Die vorliegende Erfindung betrifft eine Nachbelegungsvorrichtung zum Einbau in eine rauch-, gas- und wasserdichte, sowie zweitweise hitze - und feuerfeste Kabel- und/oder Rohrdurchführung für Schiffe oder Gebäude gemäß dem Oberbegriff des Anspruches 1.

In Gebäuden oder auf Schiffen werden Elektro- oder Datenkabel, Wasser- oder Gasleitungen oder dergleichen durch dafür vorgesehene Öffnungen in den Wänden oder Geschossdecken verlegt. Diese Öffnungen sind mit Kabel- oder Rohrdurchführungen verschlossen, die im Falle einer Rauchentwicklung, eines Gasaustrittes, eines Feuers, eines Wassereintrittes oder dergleichen einen Durchtritt von Rauch, Gas verhindern, die wasserdicht sind und die für eine vorgegebene Zeit hitze- und feuerbeständig sind. Eine solche Kabel- oder Rohrdurchführung ist beispielsweise aus der EP 2 413 123 A1 bekannt.

Aus der EP 2 493 041 A2 ist eine Leitungselementdurchführung zur nachträglichen Installation von Leitungen durch Durchbrüche in Bauelementteilen, wie Brandschutzdecken und -wänden bekannt. Offenbarungsgemäß ist dafür ein Formkörper vorgesehen, der an seinem eine Kontaktfläche aufweist. Der Formkörper wird derart in eine Öffnung des Bauelementteils eingefügt, dass zwischen einer Innenwand der Bauteilöffnung und der Kontaktfläche eine reibschlüssige Selbstklemmung entsteht. Dadurch wird eine Formschlüssige Abdichtung der Bauteildurchführung gewährleistet. Weiterhin weist der Formkörper entlang einen Verschluss mit einer Sollbruchstelle auf. Dadurch wird eine Abschottung erzielt. Gleichwohl ist durch die Sollbruchstelle ein Durchstoßen des Verschlusses mit dem Leitungselement erleichtert. Nach dem Durchstoßen liegt der Verschluß passgenau an dem Leitungselement an. Offenbarungsgemäß wird mittels der Leitungelementdurchführung eine feuer- und rauchgasdichte Abschottung eines Durchbruchs auch bei Nichtbelegung erzielt.

Aus der DE 102 27 098 A1 ist ein Kabelbaustein bekannt, der überwiegend aus einem steinartigen nicht brennbaren formstabilen Baustoff besteht. Der Kabelbaustein kann in einen Wand- oder Deckendurchbruch eingebaut werden. In dem Kabelbaustein ist ein kanalartiger Bereich zur Aufnahme und durchführen von Kabeln oder Rohren vorgesehen. Der kanalartige Bereich ist mit einem aufschäumenden Material ausgekleidet, der in einem Brandfall aufschäumt und einen feuersicheren und rauchdichten Verschluß gewährleistet.

In der Praxis kommt es vor, dass nach der Fertigstellung des Hauses oder des Schiffes ein weiteres Kabel oder Rohr verlegt werden muss. Um ein mühsames Öffnen oder gar eine vollständige Erneuerung der Kabel- oder Rohrdurchführung zu vermeiden wird bereits bei dessen Errichtung eine Nachbelegungsvorrichtung in Form eines Zylinders in die Kabel- oder Rohrdurchführung eingearbeitet, wie dies aus der DE 101 50 075 A1 bekannt ist. Zu gegebener Zeit kann dann diese Nachbelegungs-vorrichtung mit einer Bohrmaschine durchbohrt und das neue Kabel oder das neue Rohr verlegt werden. Es hat sich aber herausgestellt, dass diese zylindrischen Nachbelegungsvorrichtungen unter Umständen dem auftretenden Wasserdruck nicht standhalten und einfach herausgedrückt werden.

Davon ausgehend liegt der vorliegenden Erfindung die Aufgabe zu Grunde, eine Nachbelegungsvorrichtung der eingangs genannten Art zu schaffen, die auch einem hohen Wasserdruck standhält.

Als technische Lösung dieser Aufgabe wird erfindungsgemäß eine Nachbelegunbsvorrichtung der eingangs genannten Art mit den Merkmalen des Anspruches 1 vorgeschlagen. Vorteilhafte Weiterbildungen dieser Nachbelegungsvorrichtung sind den Unteransprüchen zu entnehmen.

Es versteht sich, dass der Korpus rauch-, gas- und wasserdicht ausgeführt ist, insbesondere, dass der Korpus massiv und ohne durchgehende Öffnungen ausgeführt ist. Eine nach dieser technischen Lehre ausgebildete Nachbelegungsvorrichtung hat den Vorteil, dass das auftretende Wasser das Halteteil im Bereich des vergrößerten Außenumfangs gegen die Kabel- und/oder Rohrdurchführung drückt und damit einen formschlüssigen Halt des Halteteils, und damit der gesamten Nachbelegungsvorrichtung, innerhalb der Kabel- und/oder Rohrdurchführung bewirkt. Somit kann die Nachbelegungsvorrichtung, etwa bei hohem Wasserdruck, nicht aus der Rohrdurchführung herausgedrückt werden.

In einer bevorzugten Ausführungform hat es sich als vorteilhaft erwiesen, ein erstes Halteteil und ein zweites Halteteil an zwei sich gegenüberliegenden Seiten des Korpus anzubringen, sodass die Nachbelegungsvorrichtung etwaig auftretendem Wasserdruck auf beiden Seiten der Kabel- und/oder Rohrdurchführung standhält.

Ein weiterer Vorteil dieser Ausführungsform besteht darin, dass dieses auch bei solchen Wänden eingebaut werden kann, bei denen der hohe Wasserdruck nur auf einer Seite erwartet wird. Weil es in diesem Fall nicht auf die Einbaurichtung ankommt, wird hiermit eine Falschmontage zuverlässig vermieden.

Dabei hat es sich als vorteilhaft erwiesen, dass erste Halteteil und zweite Halteteil aus einem schwerentflammbaren und intumeszierenden Kunststoff herzustellen, weil hierdurch die später einmal aufzunehmenden Kabel und/oder Rohre gut geschützt sind. Aus fertigungstechnischen Gründen hat es sich auch als vorteilhaft erwiesen, den Korpus und das erste und das zweite Halteteil aus ein und demselben Material herzustellen.

In einer bevorzugten Ausführungsform ist der Korpus und das erste Halteteil und das zweite Halteteil aus einem formstabilen Material hergestellt. Dabei hat es sich als vorteilhaft erwiesen, den Korpus und das erste Halteteil und das zweite Halteteil aus einem nahezu poren-freien, schwer entflammbaren und aufschäumenden Materialien auf der Basis von Polyurethan (PU) herzustellen, wie dieser beispielsweise von der Firma AIK Flammadur Brandschutz GmbH unter der Produktbezeichnung A365 angeboten wird. Dieses Polyurethan liegt in fliesfähiger Form vor und wird zur Herstellung der Nachbelegungsvorrichtung in entsprechende Formen gegossen. Nach dem Aushärten ist dieses Material dann formstabil.

In einer bevorzugten Ausführugnsform wird beim Einbau der Nachbelegungsvorrichtung in die Kabel- und/oder Rohrdurchführung der zwischen der Nachbelegungsvorrichtung und der Kabel- und/oder Rohrdurchführung verbleibende Spalt mit dem gleichen Material verfüllt, mit dem auch die Nachbelegungsvorrichtung hergestellt wurde. Dabei wird das noch fliessfähige Material mittels einer Kartusche in den Spalt verbracht. Nach dem Aushärten vergrößert sich das Volumen dieses Materials um etwa 1% und stellt so sicher, dass die aus einem formstabilen Material hergestellte Nachbelegungsvorrichtung zuverlässig in der Kabel- und/oder Rohrdurchführung gehalten wird.

In einer anderen bevorzugten Ausführungsform ist der Korpus in der Mitte angeordnet, sodass sich das erste Halteteil an einer ersten Seite des Korpus und das zweite Halteteil an einer der ersten Seite des Korpus gegenüberliegenden, zweiten Seite des Korpus anschließt. Vorteilhafterweise ist die Nachbelegungsvorrichtung dabei einstückig ausgebildet, weil hierdurch die Fertigungskosten deutlich reduziert sind.

In einer ganz anderen, vorteilhaften Ausführungsform ist im ersten und/oder im zweiten Halteteil ein bis an den Korpus reichender, hohler Führungskanal ausgebildet. Für den Fall das ein weiteres Kabel oder ein weiteres Rohr durch die Kabel- und/oder Rohrdurchführung verlegt werden soll, wird die Nachbelegungsvorrichtung derart aufgebohrt, dass das Kabel oder Rohr darin aufgenommen werden kann. Dabei führt der hohle Führungskanal den Bohrer hin zum eigentlichen Korpus, sodass sichergestellt ist, dass die Bohrung mittig, vorteilhafterweise koaxial zur virtuellen Längsachse des Korpus ausgeführt wird. In einer vorteilhaften Weiterbildung ist dieser Führungskanal sich verjüngend ausgebildet, sodass Bohrer unterschiedlichen Durchmessers mittig zum Korpus geführt werden können.

Ein weiterer Vorteil besteht darin, dass ein auftretender und in dem hohlen Führungskanal hinein dringender Wasserdruck das Halteteil nach außen drückt und somit das Halteteil gegen die Kabel- oder Rohrdurchführung drückt. Dabei verhindert das Halteteil ein Herausdrücken der Vorrichtung zuverlässig und wirkt abdichtend.

Aus fertigungstechnischen Gründen und zum leichteren Einbau der Nachbelegungsvorrichtung in der Kabel- und/oder Rohrdurchführung hat es sich als vorteilhaft erwiesen, den Korpus und/oder das erste Halteteil und das zweite Halteteil rotationssymmetrisch auszubilden.

In noch einer weiteren, bevorzugten Ausführungsform sind auf der Außenseite des Korpus und/oder auf einer Außenseite des ersten Halteteils und/oder auf einer Außenseite des zweiten Halteteils mindestens eine, zumindest teilweise umlaufende, Vertiefung ausgebildet. Diese Vertiefung kann auch als umlaufende Nut oder umlaufende Rille oder als axiale Nut ausgebildet sein. Eine solche Vertiefung hat den Vorteil, dass sich die Nachbelegungsvorrichtung damit in der Kabel- und/oder Rohrdurchführung formschlüssig einbettet und somit ein Herausdrücken, zum Beispiel aufgrund des Wasserdrucks oder beim Aufbohren des Kegels, verhindert wird.

Ein weiterer Vorteil der erfindungsgemäßen Nachbelegungsvorrichtung besteht darin, dass das Material der Nachbelegungsvorrichtung deutlich weicher ist, als die Vergussmasse, wodurch sich das Durchbohren der Kabel- und/oder Rohrdurchführung deutlich einfacher gestaltet. Hierdurch wird der Verschleiß der Werkzeuge und die Bearbeitungszeit reduziert.

Weitere Vorteile der erfindungsgemäßen Nachbelegungsvorrichtung ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1a: eine Seitenansicht einer ersten Ausführungsform einer erfindungsgemäßen Nachbelegungsvorrichtung;
- Fig. 1b: eine geschnitten dargestellte Seitenansicht der Nach-belegungsvorrichtung gemäß Fig. 1a;
- Fig. 2: eine geschnitten dargestellte Seitenansicht einer Wand mit einer Kabel- und Rohrdurchführung, in der eine kleinere und eine größere Nachbelegungsvorrichtung gemäß Fig. 1a eingebaut ist;
- Fig. 2a: eine Detailvergrößerung der Kabel- und Rohrdurchführung gemäß Fig 2 entlang der Linie IIa;
- Fig. 3: eine geschnitten dargestellte Seitenansicht einer Wand mit einer Kabel- und Rohrdurchführung mit einem in der größeren Nachbelegungsvorrichtung gemäß Fig. 1a verlegtem Kabel.

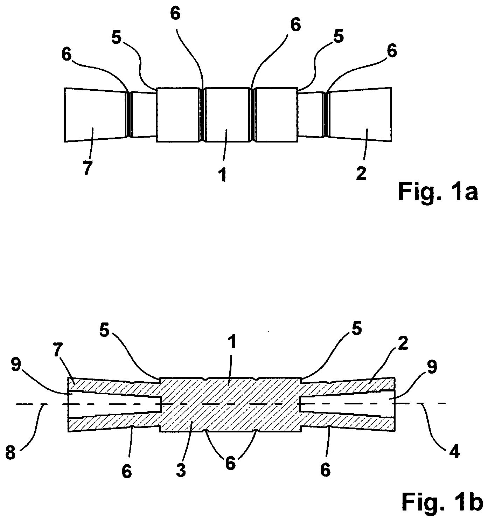

In den Figuren 1a und 1b ist eine erste Ausführungsform einer erfindungsgemäßen Nachbelegungsvorrichtung dargestellt, die einen Korpus 1 und ein erstes Halteteil 2, sowie ein zweites Halteteil 7 aufweist, wobei der Korpus 1 im Wesentlichen vollzylindrisch (ohne durchgehende Öffnungen) ausgebildet ist und eine erste virtuelle Längsachse 3 aufweist, während das erste Halteteil 2 sich konisch verjüngend ausgebildet und eine zweite, virtuelle Längsachse 4 aufweist. Das erste Halteteil 2 ist an einer ersten Stirnseite des Korpus 1 derart angeformt, dass sich die erste virtuelle Längsachse 3 des Korpus 1 und die zweite virtuelle Längsachse 4 des Halteteils 2 miteinander verbinden. Das schmalere Ende des sich verjüngenden ersten Halteteils 2 ist dabei an einer ersten Stirnseite des Korpus 1 angebracht, wobei der Durchmesser des ersten Halteteils 2 an seiner am Korpus 1 angebrachten Seite kleiner ausfällt, als der Durchmesser des Korpus 1, sodass sich hier eine Stufe 5 ausbildet.

Das zweite, eine dritte virtuelle Längsachse 8 aufweisende, Halteteil 7 ist in dieser Ausführungsform baugleich mit dem ersten Halteteil 2 ausgebildet und mit seiner schmalen Seite an einer zweiten Stirnseite des Korpus 1 angebracht. Somit zeigen die Seiten mit den großen Außenumfängen des ersten Halteteils 2 und des zweiten Halteteils 7 jeweils nach außen, während sich am Übergang vom ersten Halteteil 2 zum Korpus 1 und am Übergang vom zweiten Halteteil 7 zum Korpus 1 je eine Stufe 5 ausbildet. Auch Fluchten in die virtuellen Längsachsen 3, 4 und 8 miteinander, sodass die Nachbelegungsvorrichtung gemäß den Figuren 1a und 1b rotationssymmetrisch ist.

Auf der Außenseite des Korpus 1 sind zwei umlaufende Vertiefungen 6 ausgebildet, die die Form einer Rille aufweisen. Auch am ersten Halteteil 2 und am zweiten Halteteil 7 ist auf der Außenseite eine Vertiefung 6 in Form einer umlaufenden Rille vorgesehen.

In der hier gezeigten ersten Ausführungsform ist sowohl der Korpus 1, als auch das erste Halteteil 2 aus einem rauch-, gas- und wasserdichten, sowie einem schwer entflammbaren und intumeszierenden Kunststoff hergestellt, der zumindest im ausgehärteten Zustand formstabil und unter Krafteinwirkung nachgiebig ist.

Sowohl das erste Halteteil 2, als auch das zweite Halteteil 7 weist koaxial zur zweiten virtuellen Längsachse 4 und zur dritten virtuellen Längsachse 8 einen Führungskanal 9 auf, der zum Korpus 1 hin verjüngend ausgebildet ist.

In einer anderen, hier nicht dargestellten Ausführungsform kann das erste Halteteil und das zweite Halteteil durchaus unterschiedlich gestaltet sein. In einer weiteren Ausführungsform kann der Führungskanal auch hohlzylindrisch ausgebildet sein. In noch einer anderen Ausführungsform kann die Vertiefung auch als Nut ausgebildet sein.

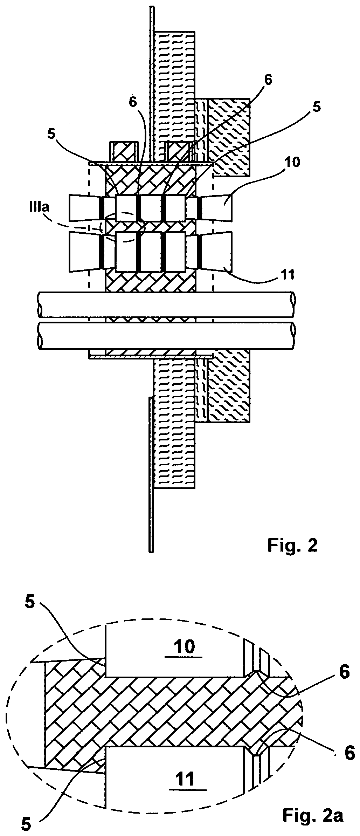

Fig. 2 und Fig. 2a zeigen einen Querschnitt einer Wand mit einer Kabel- und Rohrdurchführung, in der eine kleine Nachbelegungsvorrichtung 10 und eine baugleiche, aber größere Nachbelegungsvorrichtung 11 eingebaut sind. Beim Einbau werden die Nachbelegungsvorrichtungen 10, 11 mit demselben Material in den dafür vorgesehenen Öffnungen verklebt, wobei das Material beim Aushärten leicht quillt (etwa 1%) und so so dass die Nachbelegungs-vorrichtung zuverlässig und gas-, rauch- und wasserdicht in der Kabel- und/oder Rohrdurchführung eingebettet ist.

Aufgrund der konischen Ausbildung des ersten Halteteils 2 oder des zweiten Halteteils 7 ist ein Herausdrücken der Nachbelegungsvorrichtung 10, 11, z. B. aufgrund von hohem Druck, nur schwer möglich. Weil diese kegelförmigen Halteteile 2, 7 vom Druck gegen die Kabel- und/oder Rohrdurchführung gedrückt werden, kann die Nachbelegungsvorrichtung 10, 11 dem Druck gut standhalten. Auch wird hieraus deutlich, dass die Vertiefungen 6 und die Stufen 5 zu einem guten Halt der Nachbelegungsvorrichtungen 10, 11 innerhalb der Kabel- und/oder Rohrdurchführung beitragen.

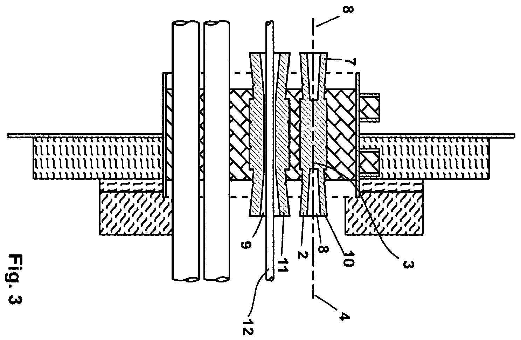

In Fig. 3 sind die Nachbelegungsvorrichtungen 10, 11 geschnitten dargestellt und darüber hinaus ist die Nachbelegungsvorrichtung 11 aufgebohrt und in dem hier entstandenen Hohlraum ist ein Kabel 12 nachträglich eingezogen worden. Auch hier sieht man deutlich, dass sowohl das erste Halteteil 2, als auch das zweite Halteteil 7 aufgrund des sich vergrößernden Außenumfangs für einen guten Halt der Nachbelegungsvorrichtung 10, 11 innerhalb der Kabel- und/oder Rohrdurchführung sorgen und dass dieser Halt dadurch verstärkt wird, dass auf dem Außenumfang des Korpus 1 und/oder des ersten Halteteils 2 und/oder des zweiten Halteteils 7 eine Vertiefung 6 vorgesehen ist. Auch die zwischen dem ersten Halteteil 2 und dem Korpus 1, sowie die zwischen dem zweiten Halteteil 7 und dem Korpus 1 ausgebildete Stufe 5 trägt ebenfalls dazu bei, dass die Nachbelegungsvorrichtungen 10, 11 nicht so leicht von etwaig auftretendem Wasserdruck herausgedrückt werden können.

## Patentansprüche

1. Nachbelegungsvorrichtung zum Einbau in eine rauch-, gas- und wasserdichte, sowie zweitweise hitze - und feuerfeste Kabel- und/oder Rohrdurchführung für Schiffe oder Gebäude, mit einem rauch-, gas- und wasserdicht ausgeführtem Korpus (1), der aus einem schwerentflammbaren und intumeszierenden Kunststoff hergestellt ist, wobei der Korpus (1) eine virtuelle Längsachse (3) aufweist, wobei am Korpus (1) ein erstes, eine virtuelle Längsachse (4) aufweisendes Halteteil (2) und ein zweites, eine virtuelle Längsachse (8) aufweisendes Halteteil (7) derart angeordnet ist, dass die virtuelle Längsachse (3) des Korpus (1) mit der virtuellen Längsachse (4) des ersten Halteteiles (2) fluchtet und dass die virtuelle Längsachse (3) des Korpus (1) mit der virtuellen Längsachse (8) des zweiten Halteteiles (7) fluchtet und dass sich der Außenumfang des ersten Halteteiles (2) und der Außenumfang des zweiten Halteteiles (7) vom Korpus (1) ausgehend vergrößert.

2. Nachbelegungsvorrichtung nach Anspruch 1,
**dadurch gekennzeichnet,**
**dass** das erste Halteteil (2) und/oder das zweite Halteteil (7) aus einem schwerentflammbaren und intumeszierenden Kunststoff hergestellt ist.

3. Nachbelegungsvorrichtung nach einem der vorangehenden Ansprüche,
**dadurch gekennzeichnet,**
**dass** der Korpus (1), das erste Halteteil (2) und das zweite Halteteil (7) aus ein und demselben Material hergestellt sind.

4. Nachbelegungsvorrichtung nach einem der vorangehenden Ansprüche,
**dadurch gekennzeichnet,**
**dass** sich das erste Halteteil (2) an einer ersten Seite des Korpus (1) anschließt, während sich das zweite Halteteil (7) an einer der ersten Seite des Korpus (1) gegenüberliegenden, zweiten Seite des Korpus (1) anschließt.

5. Nachbelegungsvorrichtung nach Anspruch 4,
**dadurch gekennzeichnet,**
**dass** der Korpus (1), das erste Halteteil (2) und das zweite Halteteil (7) einstückig ausgebildet sind.

6. Nachbelegungsvorrichtung nach einem der vorangehenden Ansprüche,
**dadurch gekennzeichnet,**
**dass** im ersten Halteteil (2) und/oder im zweiten Halteteil (7) ein bis an den Korpus (1) reichender, hohler Führungskanal (9) ausgebildet ist.

7. Nachbelegungsvorrichtung nach Anspruch 6,
**dadurch gekennzeichnet,**
**dass** der Führungskanal (9) zum Korpus (1) hin sich verjüngend ausgebildet ist.

8. Nachbelegungsvorrichtung nach einem der vorangehenden Ansprüche,
**dadurch gekennzeichnet,**
**dass** der Korpus (1) und/oder das erste Halteteil (2) und/oder das zweite Halteteil (7) rotationssymmetrisch ausgebildet ist.

9. Nachbelegungsvorrichtung nach einem der vorangehenden Ansprüche,
**dadurch gekennzeichnet,**
**dass** auf einer Außenseite des Korpus (1) und/oder auf einer Außenseite des ersten Halteteiles (2) und/oder auf einer Außenseite des zweiten Halteteiles (7) mindestens eine zumindest teilweise umlaufende Vertiefung (6) ausgebildet ist,

10. Nachbelegungsvorrichtung nach Anspruch 9,
**dadurch gekennzeichnet,**
**dass** die Vertiefung (6) als umlaufende Nut oder umlaufende Rille ausgebildet ist.

11. Nachbelegungsvorrichtung nach einem der vorangehenden Ansprüche,
**dadurch gekennzeichnet,**
**dass** der Korpus (1) und/oder das erste Halteteil (2) und/oder das zweite Halteteil (7) aus einem formstabilen Material hergestellt ist.

12. Nachbelegungsvorrichtung nach Anspruch 11,
**dadurch gekennzeichnet,**
**dass** der Korpus (1) und/oder das erste Halteteil (2) und/oder das zweite Halteteil (7) aus einem porenarmen, schwerentflammbaren und aufschäumenden Material auf Basis von Polyurethan (PU) hergestellt ist.

## Claims

1. An assignment device for installation in a smokeproof, gasproof, and waterproof, temporarily heat-resistant and fire-resistant cable and/or pipe duct for ships or buildings, comprising a smokeproof, gasproof, and waterproof carcass (1) that is manufactured from a flame-retardant and intumescent plastic, with the carcass (1) having a virtual longitudinal axis (3),
wherein a first holding part (2) having a virtual longitudinal axis (4) and a second holding part (7) having a virtual longitudinal axis (8) are arranged such that the virtual longitudinal axis (3) of the carcass (1) is aligned with the virtual longitudinal axis (4) of the first holding part (2) and such that the virtual longitudinal axis (3) of the carcass (1) is aligned with the virtual longitudinal axis (8) of the second holding part (7) and such that the outer periphery of the first holding part (2) and the outer periphery of the second holding part (7) increase starting from the carcass (1).

2. An assignment device in accordance with claim 1,
**characterized in that**
the first holding part (2) and/or the second holding part (7) is/are manufactured from a flame-retardant and intumescent plastic.

3. An assignment device in accordance with one of the preceding claims,
**characterized in that**
the carcass (1), the first holding part (2), and the second holding part (7) are manufactured from one and the same material.

4. An assignment device in accordance with one of the preceding claims,
**characterized in that**
the first holding part (2) adjoins a first side of the carcass (1), while the second holding part (7) adjoins a second side of the carcass (1) disposed opposite the first side of the carcass (1).

5. An assignment device in accordance with claim 4,
**characterized in that**
the carcass (1), the first holding part (2), and the second holding part (7) are formed in one piece.

6. An assignment device in accordance with one of the preceding claims,
**characterized in that**
a hollow guide channel (9) extending up to the carcass (1) is formed in the first holding part (2) and/or in the second holding part (7).

7. An assignment device in accordance with claim 6,
**characterized in that**
the guide channel (9) is formed tapering toward the carcass (1).

8. An assignment device in accordance with one of the preceding claims,
**characterized in that**
the carcass (1) and/or the first holding part (2) and/or the second holding part (7) is/are rotationally symmetrical.

9. An assignment device in accordance with one of the preceding claims,
**characterized in that**
at least one at least partially peripheral recess (6) is formed at an outer side of the carcass (1) and/or at an outer side of the first holding part (2) and/or at an outer side of the second holding part (7).

10. An assignment device in accordance with claim 9,
**characterized in that**
the recess (6) is formed as a peripheral groove or as a peripheral furrow.

11. An assignment device in accordance with one of the preceding claims,
**characterized in that**
the carcass (1) and/or the first holding part (2) and/or the second holding part (7) is/are manufactured from a material of stable shape.

12. An assignment device in accordance with claim 11,
**characterized in that**
the carcass (1) and/or the first holding part (2) and/or the second holding part (7) is/are manufactured from a low-porous, flame-retardant, and foaming material on a polyurethane (PU) base.

## Revendications

1. Dispositif d'insertion destiné au montage dans un passage de câbles et/ou de tubes étanche à la fumée, au gaz et à l'eau, ainsi que résistant temporairement à la chaleur et au feu pour navires ou bâtiments, comprenant un corps (1) réalisé étanche à la fumée, au gaz et à l'eau, qui est fabriqué en matière plastique intumescente et difficilement inflammable, le corps (1) comportant un axe longitudinal (3) virtuel, un premier élément de maintien (2) comportant un axe longitudinal (4) virtuel et un second élément de maintien (7) comportant un axe longitudinal (8) virtuel étant disposés sur le corps (1) de telle manière que l'axe longitudinal (3) virtuel du corps (1) s'aligne avec l'axe longitudinal (4) virtuel du premier élément de maintien (2) et que l'axe longitudinal (3) virtuel du corps (1) s'aligne avec l'axe longitudinal (8) virtuel du second élément de maintien (7) et que la circonférence extérieure du premier élément de maintien (2) et la circonférence extérieure du second élément de maintien (7) augmentent en partant du corps (1).

2. Dispositif d'insertion selon la revendication 1,
**caractérisé en ce que**
le premier élément de maintien (2) et/ou le second élément de maintien (7) sont fabriqués en matière plastique intumescente et difficilement inflammable.

3. Dispositif d'insertion selon l'une des revendications précédentes,
**caractérisé en ce que**
le corps (1), le premier élément de maintien (2) et le second élément de maintien (7) sont fabriqués en un seul et même matériau.

4. Dispositif d'insertion selon l'une des revendications précédentes,
**caractérisé en ce que**
le premier élément de maintien (2) est contigu à un premier côté du corps (1), tandis que le second élément de maintien (7) est contigu à un second côté du corps (1), opposé au premier côté du corps (1).

5. Dispositif d'insertion selon la revendication 4,
**caractérisé en ce que**
le corps (1), le premier élément de maintien (2) et le second élément de maintien (7) sont réalisés d'un seul tenant.

6. Dispositif d'insertion selon l'une des revendications précédentes,
**caractérisé en ce que**
un conduit de guidage (9) creux s'étendant jusqu'au corps (1) est réalisé dans le premier élément de maintien (2) et/ou le second élément de maintien (7).

7. Dispositif d'insertion selon la revendication 6,
**caractérisé en ce que**
le conduit de guidage (9) est réalisé s'amincissant en direction du corps (1).

8. Dispositif d'insertion selon l'une des revendications précédentes,
**caractérisé en ce que**
le corps (1) et/ou le premier élément de maintien (2) et/ou le second élément de maintien (7) sont réalisés à symétrie de révolution.

9. Dispositif d'insertion selon l'une des revendications précédentes,
**caractérisé en ce que**
au moins un enfoncement (6) au moins en partie périphérique est réalisé sur un côté extérieur du corps (1) et/ou sur un côté extérieur du premier élément de maintien (2) et/ou sur un côté extérieur du second élément de maintien (7).

10. Dispositif d'insertion selon la revendication 9,
**caractérisé en ce que**
l'enfoncement (6) est réalisé sous la forme d'une rainure périphérique ou d'une gorge périphérique.

11. Dispositif d'insertion selon l'une des revendications précédentes,
**caractérisé en ce que**
le corps (1) et/ou le premier élément de maintien (2) et/ou le second élément de maintien (7) sont fabriqués en un matériau à stabilité de forme.

12. Dispositif d'insertion selon la revendication 11,
**caractérisé en ce que**
le corps (1) et/ou le premier élément de maintien (2) et/ou le second élément de maintien (7) sont fabriqués en un matériau peu poreux, intumescent et difficilement inflammable à base de polyuréthane (PU).
